(19) Europäisches Patentamt
European Patent Office
Office européen des brevets

(11) EP 4 738 474 A1

(12) **EUROPEAN PATENT APPLICATION**

(43) Date of publication:
06.05.2026 Bulletin 2026/19

(21) Application number: 25212123.1

(22) Date of filing: 29.10.2025

(51) International Patent Classification (IPC):
*H01M 4/62* (2006.01)

(52) Cooperative Patent Classification (CPC):
H01M 4/625

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 29.10.2024 KR 20240149667

(71) Applicant: **SK On Co., Ltd.**
**Seoul 03161 (KR)**

(72) Inventor: **KO, Byoung Ho**
**34124 Daejeon (KR)**

(74) Representative: **Stolmár & Partner**
**Patentanwälte PartG mbB**
**Blumenstraße 17**
**80331 München (DE)**

(54) **ELECTRODE FOR SECONDARY BATTERY AND LITHIUM SECONDARY BATTERY INCLUDING THE SAME**

(57) The present disclosure provides an electrode for a secondary battery and a lithium secondary battery including the same. The electrode for a secondary battery according to the present disclosure includes an electrode current collector, and an electrode active material layer disposed on one surface of the electrode current collector, and including an electrode active material and a graphene conductive material. The number of layers of the graphene conductive material, as defined by Equation 1, is 2 to 15.

[Equation 1]

$$\text{Number of layers} = (Lc / D) + 1$$

(in Equation 1, Lc represents a grain size (Å) and D represents a d-spacing (Å), calculated from X-ray diffraction (XRD) analysis results of the graphene conductive material)

[FIG. 1]

EP 4 738 474 A1

**Description**

BACKGROUND

1. Field of the Invention

The present disclosure relates to an electrode for a secondary battery and a lithium secondary battery including the same.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickel-cadmium battery, and a nickel-hydrogen battery. Among these, lithium secondary batteries are actively developed and applied due to their high operating voltage, high energy density per unit weight, and advantages in charging speed and weight reduction.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are accommodated.

It is preferable for lithium secondary batteries to have low internal resistance and high rate characteristics, thereby exhibiting improved fast charge and discharge characteristics. Therefore, the development of electrodes capable of achieving lithium secondary batteries with low resistance and high rate characteristics is required.

SUMMARY

An object of the present disclosure is to provide an electrode for a secondary battery having improved electrochemical properties.

Another object of the present disclosure is to provide a lithium secondary battery including the electrode for a secondary battery.

An electrode for a secondary battery according to exemplary embodiments of the present disclosure includes: an electrode current collector; and an electrode active material layer disposed on one surface of the electrode current collector and including an electrode active material and a graphene conductive material. The number of layers of the graphene conductive material, as defined by Equation 1 below, is 2 to 15.

$$[\text{Equation 1}]$$

$$\text{Number of layers} = (\text{Lc} / \text{D}) + 1$$

In Equation 1, Lc represents a grain size (Å) and D represents a d-spacing (Å), calculated from X-ray diffraction (XRD) analysis results of the graphene conductive material.

According to exemplary embodiments, the number of layers may be 3 to 12.

According to exemplary embodiments, in Equation 1, D may be 2.5 Å to 3.5 Å.

According to exemplary embodiments, in Equation 1, Lc may be 7.5 Å to 50 Å.

According to exemplary embodiments, the ratio ($I_D/I_G$) of the maximum peak intensity of the D band to the maximum peak intensity of the G band, calculated from the Raman spectroscopy results of the graphene conductive material, may be greater than 0 and less than or equal to 1.

According to exemplary embodiments, the graphene conductive material may have a 1 g/cm$^3$ powder resistivity of 0.005 Ω·cm or less.

According to exemplary embodiments, the graphene conductive material may have a BET specific surface area of 100 m$^2$/g to 1000 m$^2$/g.

According to exemplary embodiments, the content of the graphene conductive material may be 0.01% by weight to 1% by weight based on the total weight of the electrode active material layer.

According to exemplary embodiments, the content of the graphene conductive material may be 0.1% by weight to 0.5% by weight based on the total weight of the electrode active material layer.

According to exemplary embodiments, the electrode active material may include a lithium metal oxide.

According to exemplary embodiments, the electrode active material may include a graphite-based active material or a silicon-based active material.

A lithium secondary battery according to exemplary embodiments of the present disclosure includes a cathode and an anode disposed opposite to the cathode. The cathode or the anode is the electrode for a secondary battery.

The electrode for a secondary battery according to exemplary embodiments of the present disclosure may have improved electrode internal resistance. Accordingly, the fast charge and discharge performance of a battery including the electrode may be improved.

The electrode for a secondary battery according to exemplary embodiments of the present disclosure may have improved rate characteristics. Accordingly, a battery with improved cycle life characteristics may be achieved.

The electrode for a secondary battery according to the present disclosure and the lithium secondary battery including the same may be widely applied in green technology fields, such as electric vehicles, battery charging stations, as well as solar power generation, wind power generation, and the like, which use the batteries. In addition, the electrode for a secondary battery according to the present disclosure and the lithium secondary battery including the same may be used in eco-friendly electric vehicles, hybrid vehicles, and the like, which are aimed at mitigating climate change by reducing air pollution and greenhouse gas emissions.

BRIEF DESCRIPTION OF THE DRAWINGS

The above and other objects, features and other advantages of the present disclosure will be more clearly understood from the following detailed description taken in conjunction with the accompanying drawings, in which:

FIGS. 1 and 2 are scanning electron microscope (SEM) images of the graphene conductive materials of Preparative Examples 1 and 2, respectively;
FIGS. 3 and 4 are transmission electron microscope (TEM) images of the graphene conductive materials of Preparative Examples 1 and 2, respectively; and
FIGS. 5 to 9 are SEM images of the cathode active material layers of Example 1, Comparative Examples 1, 3, 6 and 7, respectively.

DETAILED DESCRIPTION

The present disclosure provides an electrode for a secondary battery including a conductive material with improved electrical conductivity characteristics. In addition, the present disclosure provides a lithium secondary battery including the electrode for a secondary battery.

Hereinafter, embodiments of the present disclosure will be described in detail with reference to the accompanying drawings. However, these are merely illustrative and the present disclosure is not limited to the specific embodiments described as examples.

The electrode for a secondary battery according to the present disclosure may be a cathode or an anode.

The electrode for a secondary battery according to the present disclosure includes an electrode current collector and an electrode active material layer disposed on one surface of the electrode current collector. The electrode active material layer may be disposed on one surface or on both surfaces of the electrode current collector.

When the electrode for a secondary battery is a cathode, the electrode current collector may be a cathode current collector. The cathode current collector may include stainless steel, nickel, aluminum, titanium, or an alloy thereof. The cathode current collector may also include aluminum or stainless steel having a surface treated with carbon, nickel, titanium, or silver. The cathode current collector may have a thickness of, for example, 10 $\mu$m to 50 $\mu$m, but is not limited thereto.

When the electrode for a secondary battery is an anode, the electrode current collector may be an anode current collector. Non-limiting examples of anode current collectors may include copper foil, nickel foil, stainless steel foil, titanium foil, nickel foam, copper foam, and a polymer substrate coated with a conductive metal. The anode current collector may have a thickness of, for example, 10 $\mu$m to 50 $\mu$m, but is not limited thereto.

The electrode active material layer includes an electrode active material. The electrode active material may be a cathode active material or an anode active material.

The cathode active material may include a lithium metal oxide. The lithium metal oxide may further include at least one of cobalt (Co), manganese (Mn) and aluminum (Al).

In some embodiments, the cathode active material or the lithium metal oxide may include a layered structure or a crystal structure represented by Formula 1 below.

[Formula 1]     $Li_xNi_aM_bO_{2+z}$

In Formula 1, x, a, b and z may satisfy $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Formula 1 indicates a bonding relationship between elements included in the layered structure or the crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element which contributes to the capacity/output activity of the cathode active material together with Co or Mn, such as Al.

For example, the cathode active material or the lithium-nickel metal oxide may include a layered structure or a crystal structure represented by Formula 1-1 below.

[Formula 1-1]     $Li_xNi_aM1_{b1}M2_{b2}O_{2+z}$

In Formula 1-1, M1 may include Co, Mn, and/or Al. M2 may include the auxiliary elements described above. In Formula 1-1, x, a, b1, b2 and z may satisfy $0.9 \leq x \leq 1.2$, $0.6 \leq a \leq 0.99$, $0.01 \leq b1+b2 \leq 0.4$, and $-0.5 \leq z \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of lithium-nickel metal oxide particles, or may penetrate through a surface of the lithium-nickel metal oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide having an increased content of nickel may be used.

Ni may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which have a chemical structure or a crystal structure represented by Formula 2 below.

[Formula 2]     $p[Li_2MnO_3] \cdot (1-p)[Li_qJO_2]$

In Formula 2, p and q may satisfy $0<p<1$, and $0.9 \leq q \leq 1.2$, and J may include at least one element selected from Mn, Ni, Co, Fe, Cr, V, Cu, Zn, Ti, Al, Mg and B.

The anode active material may include a graphite-based active material or a silicon-based active material. A material capable of adsorbing and desorbing lithium ions may be used as the anode active material. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like.

The lithium metal may include pure lithium metal or lithium metal having a protective layer formed thereon for suppressing dendrite growth, etc.

Elements included in the lithium alloy may include aluminum, zinc, bismuth, cadmium, antimony, silicon, lead, tin, gallium, indium, etc.

The silicon-containing material may provide more enhanced capacity characteristics. The silicon-containing material may include Si, $SiO_x$ (0<x<2), metal-doped $SiO_x$ (0<x<2), a silicon-carbon composite, etc. The metal may include lithium and/or magnesium, and the metal-doped $SiO_x$ (0<x<2) may include a metal silicate.

The content of the electrode active material based on the total weight of the electrode active material layer may be, for example, 80% by weight ("wt%") or more. In some embodiments, the content of the electrode active material based on the total weight of the electrode active material layer may be, for example, 90 wt% or more or 95 wt% or more.

The electrode active material layer includes a graphene conductive material. The graphene conductive material may have a shape in which multiple plates are stacked, and may be disposed between electrode active material particles to form an electrically conductive network with high conductivity.

According to exemplary embodiments, the number of layers of the graphene conductive material, as defined by Equation 1 below, is 2 to 15. In some embodiments, the number of layers of the graphene conductive material, as defined by Equation 1 below, is 3 to 12 or 4 to 10.

[Equation 1]

$$\text{Number of layers} = (L_c / D) + 1$$

In Equation 1, $L_c$ represents a grain size and D represents a d-spacing, calculated from X-ray diffraction (XRD) analysis results of the graphene conductive material.

As used herein, the term "number of layers" may refer to an average number of overlapping layers in the thickness direction of a two-dimensional plate formed by the bonding of carbon atoms in a carbon-based material.

If the number of layers is less than 2, the solids of the graphene dispersion may be reduced or stability issues may arise over time due to reaggregation.

If the number of layers exceeds 15, the electrode internal resistance may increase excessively, leading to a decrease in battery rate characteristics.

The number of layers may be derived from the XRD analysis of the graphene conductive material.

The XRD analysis may be performed using an XRD device (Empyrean or X'Pert, PANalytical) with the CuKα (1.5406Å) line as the target line. For example, XRD analysis may be performed under the following conditions.

-

$$2\theta = 10° \text{ to } 70°$$

-

$$\text{Scan speed} = 0.01° \text{ to } 0.02°/\text{s}$$

-

$$\text{Step size} = 0.027° \text{ to } 0.012°/\text{step}$$

From the XRD analysis results, the grain size may be calculated using Equation 2 below from the full width at half maximum (FWHM) of the peaks observed within the 2θ range of 23° to 28° or 25.2° to 26.3°.

[Equation 2]

$$L_c = 0.89 \times \lambda \, / \, (\beta\cos\theta)$$

In Equation 2, Lc represents the grain size in Å, λ represents the wavelength of the target line, β represents the full width at half maximum (FWHM) of the peak, converted to radians, with correction for the base width value (e.g., 0.01 to 0.1) determined by the equipment, and θ represents half (i.e., 1/2) the peak position (2θ) converted to radians.

According to exemplary embodiments, in Equation 1, Lc may be 7.5 Å to 50 Å. In some embodiments, in Equation 1, Lc may be 10 Å to 30 Å.

Within the above range, the graphene conductive material may have grains of appropriate size, thereby improving conductivity.

The d-spacing may be calculated using Equation 3 below from the peak positions observed within the 2θ range of 23° to 28° from the XRD analysis results.

[Equation 3]

$$D = \lambda \, / \, 2 \, (\sin\theta)$$

In Equation 3, D represents the d-spacing, and λ and θ are as described in Equation 2.

According to exemplary embodiments, in Equation 1, D may be 2.5 Å to 3.5 Å. In some embodiments, in Equation 1, D may be 3 Å to 3.4 Å.

Within the above range, the graphene conductive material may have an appropriate interplanar spacing, thereby improving conductivity.

According to exemplary embodiments, the ratio ($I_D/I_G$) of the maximum peak intensity of the D band to the maximum peak intensity of the G band, calculated from the Raman spectroscopy results of the graphene conductive material, may be greater than 0 and less than or equal to 1.

The Raman spectroscopy may be performed by obtaining a Raman spectrum of the graphene conductive material and calculating the Raman $I_D/I_G$ value therefrom. The Raman spectroscopy method is not particularly limited, but may be performed using the following methods.

In the process of calculating the Raman $I_D/I_G$ value, the Raman spectrum for the graphene conductive material may be obtained using Raman spectroscopy equipment (manufacturer: Renishaw, model name: in Via™ confocal Raman microscope) equipped with a continuous wave laser (manufacturer: HÜBNER Photonics, model name: Cobolt 04-01 Series Samba™, output wavelength: 532.1±0.3 nm) and a charge-coupled device (CCD) camera.

In the process of obtaining a Raman spectrum of the graphene conductive material, an objective lens (manufacturer: Leica, model name: N PLAN EPI 50x/0.75NA) may be used to focus a laser light source on the graphene conductive material, and the laser intensity reaching the sample may be about 0.1 mW to about 5 mW.

The Raman $I_D/I_G$ value is the ratio of the D band intensity ($I_D$) to the G band intensity ($I_G$). For example, in the Raman spectrum obtained from the graphene conductive material, a peak observed in the region of 1,540 cm⁻¹ to 1,620 cm⁻¹ may be the G band peak, and a peak observed in the region of 1,300 cm⁻¹ to 1,420 cm⁻¹ may be the D band peak.

According to some embodiments, the ratio ($I_D/I_G$) of the D band maximum peak intensity ($I_D$) to the G band maximum peak intensity ($I_G$) may be 0.1 to 0.8, or 0.5 to 0.7.

Within the above range, the graphene conductive material may better fill pores between electrode active material particles, reducing the pore volume that can act as resistance within the electrode. Consequently, the electrode internal resistance may be reduced.

According to exemplary embodiments, the graphene conductive material may have a 1 g/cm³ powder resistivity of 0.005 Ω·cm or less. In some embodiments, the 1 g/cm³ powder resistivity of the graphene conductive material may be greater than 0 and less than or equal to 0.004 Ω·cm.

Within the above range, the electrical conductivity of the electrode active material layer may be further improved.

For example, the powder resistivity may be measured in units of Ω·cm by filling an insulating mold with the graphene conductive material, pressing the mold at different pressures, and then measuring the current and voltage on the surface of each specimen having different densities using four probes.

A fitted line may be derived with the density of the specimens as the X-axis and the volume resistivity of the specimens as the Y-axis, and the powder resistivity may be calculated when X is 1 $g/cm^3$.

According to exemplary embodiments, the graphene conductive material may have a BET specific surface area of 100 $m^2/g$ to 1000 $m^2/g$. According to some embodiments, the BET specific surface area of the graphene conductive material may be 300 $m^2/g$ to 600 $m^2/g$.

Within the above range, sufficient contact sites may be formed between the electrode active material particles and/or the graphene conductive material particles in the electrode active material layer. Accordingly, a highly conductive electrical network may be formed, and the rate characteristics of the battery may be improved.

For example, the BET specific surface area may be measured using the 5-point method of BET relative pressure with five predefined relative pressure points by a continuous flow method, employing nitrogen as an adsorbent gas and helium as a carrier gas, with ASAP2420 (Micromeritics) equipment. After heating the graphene conductive material, the pressure may be reduced to 10 $\mu$mHg or less to remove internal moisture and gas. The sample may then be cooled to liquid nitrogen temperature (77.300 K) to adsorb a nitrogen/helium mixed gas, followed by desorbing the nitrogen gas by heating to room temperature (e.g., about 25 °C). The amount of adsorbed and desorbed nitrogen may be detected using a thermal conductivity detector to calculate the specific surface area of the sample.

According to exemplary embodiments, the content of the graphene conductive material may be 0.01 wt% to 1 wt% based on the total weight of the electrode active material layer. In some embodiments, the content of the graphene conductive material may be 0.05 wt% to 0.7 wt%, 0.2 wt% to 0.5 wt%, or 0.1 wt% to 0.5 wt% based on the total weight of the electrode active material layer.

Within the above range, the electrode internal resistance may be further reduced, and the rate characteristics of the battery may be further improved.

The electrode active material layer may further include other additives in addition to the electrode active material and a conductive material.

For example, the electrode active material layer may further include a dispersant for dispersing the graphene conductive material. The dispersant may be used to uniformly disperse the highly cohesive graphene conductive material. For example, the dispersant may be used in an amount of 1 to 30 parts by weight based on 100 parts by weight of the graphene conductive material.

For example, when the electrode active material layer is a cathode active material layer, it may further include a cathode binder, a thickener or the like.

The cathode binder may include polyvinylidene fluoride (PVDF), poly(vinylidene fluoride-co-hexafluoropropylene), polyacrylonitrile, polymethyl methacrylate, acrylonitrile butadiene rubber (NBR), poly(butadiene) rubber (BR), styrene-butadiene rubber (SBR) and the like. In one embodiment, a PVDF-based binder may be used as the cathode binder.

The thickener may include carboxymethyl cellulose (CMC) or the like.

For example, when the electrode active material layer is an anode active material layer, it may further include an anode binder, a thickener or the like.

The anode binder may include a styrene-butadiene rubber (SBR)-based binder, carboxymethyl cellulose (CMC), a polyacrylic acid-based binder, a poly(3,4-ethylenedioxythiophene) (PEDOT)-based binder and the like.

According to exemplary embodiments, the electrode may be manufactured by forming an electrode active material layer on the surface of an electrode current collector. The electrode active material layer may be formed from an electrode slurry including an electrode active material and a conductive material. The electrode slurry may be applied to the surface of the electrode current collector, followed by drying and roll-pressing to form the electrode active material layer.

The coating method is not particularly limited, and may be performed by methods such as gravure coating, slot die coating, simultaneous multilayer die coating, imprinting, doctor blade coating, dip coating, bar coating, casting and the like.

The electrode slurry may include the above-described dispersant, binder, thickener, and the like, and may also include a solvent.

For example, when the electrode slurry is a cathode slurry, the solvent may include N-methyl-2-pyrrolidone (NMP), dimethylformamide, dimethylacetamide, N,N-dimethylaminopropylamine, ethylene oxide, tetrahydrofuran and the like.

For example, when the electrode slurry is an anode slurry, the solvent may include water, pure water, deionized water, distilled water, ethanol, isopropanol, methanol, acetone, n-propanol, t-butanol and the like.

A lithium secondary battery according to the present disclosure includes a cathode and an anode disposed opposite to the cathode. The cathode or the anode is an electrode for a secondary battery.

In some embodiments, both the cathode and the anode may be electrodes for the secondary battery. In one embodiment, the cathode may include a cathode active material layer including a first graphene conductive material, and the anode may include an anode active material layer including a second graphene conductive material. The number of layers of the first graphene conductive material and the second graphene conductive material, each independently defined by Equation 1, may be 2 to 15.

A separator may be interposed between the cathode and the anode. The separator may be configured to prevent an electrical short-circuit between the cathode and the anode and to allow the flow of ions. Depending on the embodiment, the separator may have a thickness of 10 $\mu$m to 20 $\mu$m, but the present disclosure is not limited thereto.

For example, the separator may include a porous polymer film or a porous nonwoven fabric. The porous polymer film may include a polyolefin-based polymer such as an ethylene polymer, a propylene polymer, an ethylene/butene copolymer, an ethylene/hexene copolymer, an ethylene/methacrylate copolymer and the like. The porous nonwoven fabric may include glass fibers having a high melting point, polyethylene terephthalate fibers and the like. The separator may also include a ceramic-based material. For example, inorganic particles may be coated on the polymer film or dispersed within the polymer film to improve heat resistance.

The separator may have a single-layer or multi-layer structure including the above-described polymer film and/or nonwoven fabric.

According to exemplary embodiments, the cathode, the anode and the separator may be repeatedly stacked to form an electrode assembly. In some embodiments, the electrode assembly may be a winding type, a stacking type, a z-folding type, or a stacked-folding type.

The electrode assembly may be accommodated in a case together with an electrolyte to define a lithium secondary battery. According to exemplary embodiments, a non-aqueous electrolyte may be used.

The non-aqueous electrolyte may include a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

The organic solvent may include an organic compound which has sufficient solubility in the lithium salt and the additive, and is electrochemically stable without exhibiting reactivity in the battery. For example, the organic solvent may include at least one of a carbonate solvent, an ester solvent, an ether solvent, a ketone solvent, an alcohol solvent and an aprotic solvent. As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a solid electrolyte may be used in place of the above-described separator and non-aqueous electrolyte. In this case, the lithium secondary battery may be manufactured in the form of an all-solid-state battery.

The solid electrolyte may include a sulfide-based electrolyte. As a non-limiting example, the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O$-LiI, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, Z is Ge, Zn or Ga), $Li_2S-GeS_2$, $Li_2S-SiS_2-Li_3PO_4$, $Li_2S-SiS_2-Li_pMO_q$ (p and q are positive numbers, M is P, Si, Ge, B, Al, Ga or In), $Li_7-xPS_6-xCl_x$ ($0 \leq x \leq 2$), $Li_7-xPS_6-xBr_x$ ($0 \leq x \leq 2$), $Li_7-xPS_6-xI_x$ ($0 \leq x \leq 2$), etc. These may be used alone or in combination of two or more thereof.

In one embodiment, the solid electrolyte may include an oxide-based amorphous solid electrolyte, such as, for example, $Li_2O-B_2O_3-P_2O_5$, $Li_2O-SiO_2$, $Li_2O-B_2O_3$, $Li_2O-B_2O_3-ZnO$, etc.

For example, electrode tabs (cathode tabs and anode tabs) may protrude from the cathode current collector and the anode current collector, respectively, and may extend to one side of the case. The electrode tabs may be welded together with the one side of the case and connected to electrode leads (a cathode lead and an anode lead) that extend to or are exposed outside the case.

For example, a pouch-type case, a prismatic case, a cylindrical case, or a coin-type case may be used.

Hereinafter, the embodiments of the present disclosure will be further described with reference to specific experimental examples. The examples and comparative examples included in the experimental examples are merely illustrative of the present disclosure and do not limit the scope of the appended claims. It will be apparent to those skilled in the art that various changes and modifications to the examples may be made within the scope and technical spirit of the present disclosure, and it is also understood that such changes and modifications fall within the scope of the appended claims.

## Preparative Examples

Graphite was introduced into a concentrated sulfuric acid solution and reacted in a cold bath in the presence of a $KMnO_4$ catalyst to perform pre-oxidation. Water was then added and further oxidation was performed in a heated bath to produce graphene oxide. The graphene oxide was dispersed in a diluted acid solution to remove impurities and purify the product.

The graphene oxide was obtained by filtration and low-temperature drying, and then reduced at high temperatures in a protective gas atmosphere to prepare graphene conductive materials having the following properties.

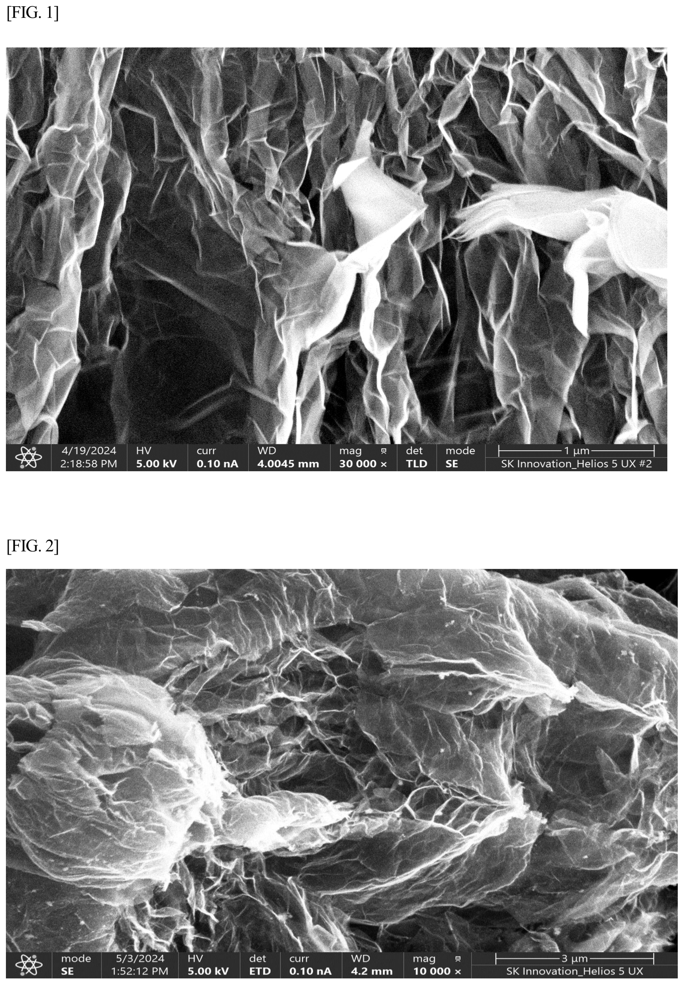

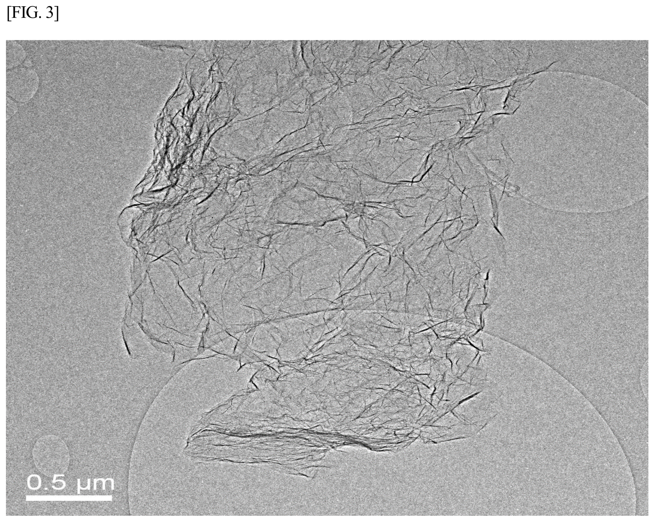

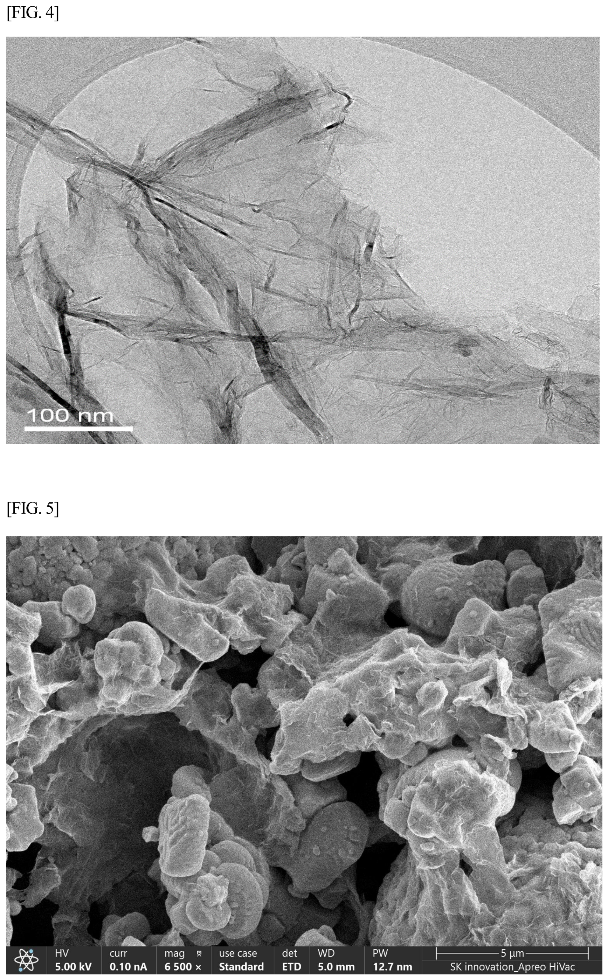

FIGS. 1 and 2 are scanning electron microscope (SEM) images of the graphene conductive materials of Preparative Examples 1 and 2, respectively. FIGS. 3 and 4 are transmission electron microscope (TEM) images of the graphene conductive materials of Preparative Examples 1 and 2, respectively.

The graphene conductive materials of Preparative Examples 1 and 2 were analyzed by X-ray diffraction (XRD) to measure the full width at half maximum (FWHM) of the (002) peak and the crystal grain size calculated therefrom, and the ratio of atoms corresponding to C 1s and O 1s was analyzed by X-ray photoelectron spectroscopy (XPS). The results are shown in Table 1 below.

[TABLE 1]

| | | Degree of Graphitization (P) | XRD (002) peak | | XPS (Atomic %) | |
|---|---|---|---|---|---|---|
| | | | FWHM | Grain size (Å) | C1s | O1s |
| Preparative Example 1 | G-1 | 1.2 | 7.4506 | 11 | 96 | 4 |
| Preparative Example 2 | G-2 | 1.13 | 1.5925 | 52.9 | 91-94 | 6-9 |

Referring to Table 1, it can be seen that the graphene conductive materials of Preparative Examples 1 and 2 have a low oxygen content.

## Example 1

$LiNi_{0.8}Co_{0.1}Mn_{0.1}O_2$ as a cathode active material, the graphene conductive material of Preparative Example 1, polyvinylpyrrolidone (PVP) as a dispersant for a conductive material, and polyvinylidene fluoride (PVDF, Solvay, S514) as a binder were mixed in a weight ratio of 98.175:0.5:0.125:1.2, and the mixture was dispersed in N-methyl pyrrolidone to prepare a cathode slurry (solids concentration: 70%).

The cathode slurry was applied to one surface of aluminum foil (thickness: 12 $\mu$m) using a doctor blade method, and then dried and roll-pressed at 120°C for 1 hour to form a cathode active material layer having a thickness of 110 $\mu$m and a loading of 18.0 g/cm$^2$, thereby fabricating a cathode.

Artificial graphite, natural graphite, and SiOx (0<x<2) as anode active materials, multi-walled carbon nanotubes (MWCNTs, JEIO, 10B) as a conductive material, PVP as a dispersant, styrene butadiene rubber (SBR, Hansol, A200) as a binder, and carboxymethyl cellulose (CMC, Nippon Paper, MAC800LC) as a thickener were mixed in a weight ratio of 47.525:47.525:2.0:0.35:0.1:1.3:1.2, and the mixture was dispersed in water to prepare an anode slurry (solids concentration: 50%).

The anode slurry was applied to one surface of copper foil (thickness: 8 $\mu$m) using a doctor blade method, dried at 120°C for 1 hour, and roll-pressed to form an anode active material layer having a thickness of 131 $\mu$m and a loading amount of 10.2 g/cm$^2$, thereby fabricating an anode.

The above-described cathode and anode were notched into circular shapes having diameters of $\Phi$14 and $\Phi$16, respectively, and a separator (polyethylene, thickness: 13 $\mu$m) was sequentially laminated between the cathode and anode in a coin cell case. An electrolyte was injected, the coin cell case was clamped, and then impregnated for 1 hour or more.

A solution, prepared by dissolving 1.1 M $LiPF_6$ in a mixed solvent of EC/EMC (25/75; volume ratio), and further adding 8 wt% of fluoroethylene carbonate (FEC), 0.5 wt% of 1,3-propene sultone (PRS), and 1.0 wt% of 1,3-propane sultone (PS), was used as the electrolyte.

After stabilization for 12 hours or more, three formation charge and discharge cycles were performed (charging conditions: CC-CV 0.1C, 4.2 V, 0.05C cut-off; discharging conditions: CC 0.1C, 2.5 V cut-off).

## Examples and Comparative Examples

Cathodes and batteries were manufactured in the same manner as in Example 1, except that the composition of the cathode active material layer was varied as shown in Table 2 below.

[TABLE 2]

| Classification | Type of conductive material | Weight ratio based on total weight of cathode active | | | |
|---|---|---|---|---|---|
| | | Cathode active material | Conductive material | Dispersant | Binder |
| Example 1 | G-1 | 98.175 | 0.5 | 0.125 | 1.2 |
| Example 2 | | 98.425 | 0.3 | 0.075 | 1.2 |
| Example 3 | | 98.55 | 0.2 | 0.05 | 1.2 |
| Example 4 | | 98.675 | 0.1 | 0.025 | 1.2 |
| Comparative Example 1 | G-2 | 98.2 | 0.5 | 0.1 | 1.2 |
| Comparative Example 2 | | 98.68 | 0.1 | 0.02 | 1.2 |
| Comparative Example 3 | C-1 | 97.21 | 1.5 | 0.09 | 1.2 |
| Comparative Example 4 | C-2 | 98.70 | 0.1 | 0 | 1.2 |
| Comparative Example 5 | | 98.30 | 0.5 | 0 | 1.2 |
| Comparative Example 6 | | 96.80 | 2 | 0 | 1.2 |
| Comparative Example 7 | SWCNT | 98.50 | 0.1 | 0.2 | 1.2 |

G-1: Graphene of Preparative Example 1
G-2: Graphene of Preparative Example 2
C-1: Carbon black (Cabot, XC72)
C-2: Graphite-based conductive material (Imeris, KS6L)
SWCNT: Single-walled carbon nanotubes (SWCNTs) (Ocsial, TUBALL)

## Measurement Examples

Table 3 below shows the properties of the conductive materials used in the cathode fabrication of the examples and comparative examples, measured using the following methods.

## (1) Measurement of BET specific surface area

The specific surface area was measured using an ASAP2420 (Micromeritics) device, with nitrogen as an adsorbent gas and helium as a carrier gas. The BET relative pressure was measured using the 5-point method with five predefined relative pressure points by a continuous flow method. A 2 g of the conductive material was taken and heated at 150°C for 8 hours, and the pressure was then reduced to 10 $\mu$mHg or less to remove internal moisture and gases. The sample was cooled to liquid nitrogen temperature (77.300 K) to adsorb a nitrogen/helium mixture, and then heated to room temperature to desorb the adsorbed nitrogen gas. The amount of adsorbed and desorbed nitrogen was detected using a thermal conductivity detector to calculate the specific surface area of the sample.

## (2) Measurement of powder resistivity

0.2 g of conductive material was filled into a 1 mm insulating mold and pressurized under a pressure of 4 kN, 8 kN, 12 kN, 16 kN, or 20 kN. The current and voltage on the surface of each specimen with different densities were measured using four probes to determine the powder resistivity in units of $\Omega \cdot$cm. A fitted line was derived with the density of the specimens as the X-axis and the volume resistivity of the specimens as the Y-axis, and the powder resistivity was calculated when X is 1 g/cm$^3$.

**(3) Raman spectroscopy**

Raman spectra of the conductive materials were obtained using Raman spectroscopy equipment (manufacturer: Renishaw, model name: inVia™ confocal Raman microscope) equipped with a continuous wave laser (manufacturer: HÜBNER Photonics, model name: Cobolt 04-01 Series Samba™, output wavelength: 532.1±0.3 nm) and a charge-coupled device (CCD) camera.

In the process of obtaining a Raman spectrum, an objective lens (manufacturer: Leica, model name: N PLAN EPI 50x/0.75NA) was used to focus a laser light source on the conductive material, and the laser intensity reaching the sample was about 0.1 mW to about 5 mW.

The ratio ($I_D/I_G$) of the peak intensity of the D band observed in the region of 1,300 cm$^{-1}$ to 1,420 cm$^{-1}$ to the peak intensity of the G band observed in the region of 1,540 cm$^{-1}$ to 1,620 cm$^{-1}$ of the Raman spectrum was calculated.

**(4) XRD analysis**

The XRD analysis was performed using an XRD device (Empyrean or X'Pert, PANalytical) with the CuKα (1.5406Å) line as the target line under the following conditions. In addition, the d-spacing, Lc, and number of layers were calculated from the XRD analysis results using the above-described Equations 1 to 3.

-

$$2\theta = 10° \text{ to } 70°$$

-

$$\text{Scan speed} = 0.01 \text{ to } 0.02°/s$$

-

$$\text{Step size} = 0.027 \text{ to } 0.012°/\text{step}$$

[TABLE 3]

| Type of conductive material | Properties of conductive material | | | | | |
|---|---|---|---|---|---|---|
| | BET (m$^2$/g) | Powder resistivity (Ω.cm @1 g/cc) | $I_D/I_G$ | d-spacing (Å) | Lc (Å) | Number of layers |
| G-1 | 326 | 0.0034 | 0.66 | 3.40 | 11 | 4 |
| G-2 | 69 | 0.0031 | 0.60 | 3.40 | 52 | 17 |
| C-1 | 210-260 | 0.024 | 0.95 | 3.56 | - | - |
| C-2 | 20 | 0.009 | 0.15 | 3.37 | 24 | 9 |
| SWCNT | 900 | 0.001 | 0.01 | 3.52 | 12 | 5 |

**Experimental Example**

The properties of the cathode and battery were evaluated using the following methods, and the results are shown in Table 4.

**(1) Measurement of electrode internal resistance**

The cathode slurry was applied to one surface of a PET film (thickness: 100 μm) using a doctor blade method and dried at 120°C for 30 minutes to prepare an electrode sample.

The electrode sample thickness was input into a resistance meter (Mitsubishi, LORESTA-GP MCP-T610), and a 4-point probe (MCP-TP03P) was placed in contact with the sample surface to measure the electrode internal resistance (Ω.cm). The average value was used after eight measurements.

If the value exceeded 100,000 Ω.cm, it was indicated as not measurable in Table 4.

(2) Evaluation of battery rate characteristics

Discharge rate characteristics were evaluated for the batteries of the examples and comparative examples (discharging conditions: CC 0.1C, 1.5C, 2.5 V cut-off; charging conditions: CC-CV 0.3C, 4.2 V, 0.05C cut-off).

(3) Analysis of electrode surface image

Scanning electron microscope (SEM) images of the surface of the cathode active material layer in the cathode of Example 1 were captured.

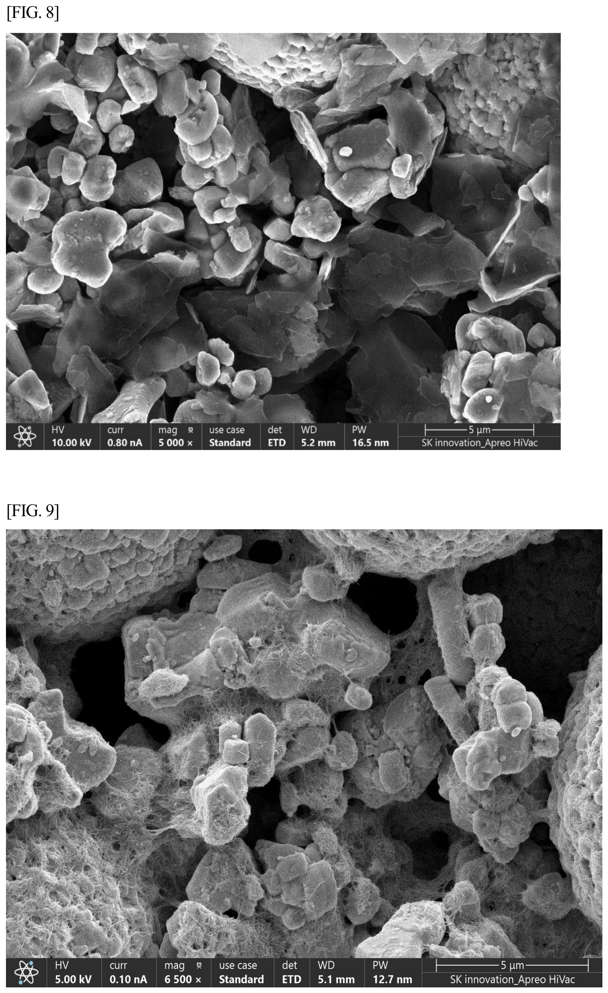

FIGS. 5 to 9 show SEM images of the cathode active material layers of Example 1 and Comparative Examples 1, 3, 6 and 7, respectively.

[TABLE 4]

| Classification | Electrode resistance (Ω.cm) | Rate capability (% @1.5C vs 0.1C) |
|---|---|---|
| Example 1 | 9.7 | 49 |
| Example 2 | 10.9 | 45 |
| Example 3 | 12.5 | 41 |
| Example 4 | 17.8 | 36 |
| Comparative Example 1 | 167 | 7 |
| Comparative Example 2 | Not measurable | - |
| Comparative Example 3 | 62.34 | 27 |
| Comparative Example 4 | Not measurable | - |
| Comparative Example 5 | Not measurable | - |
| Comparative Example 6 | 86,000 | - |
| Comparative Example 7 | 12.57 | 41 |

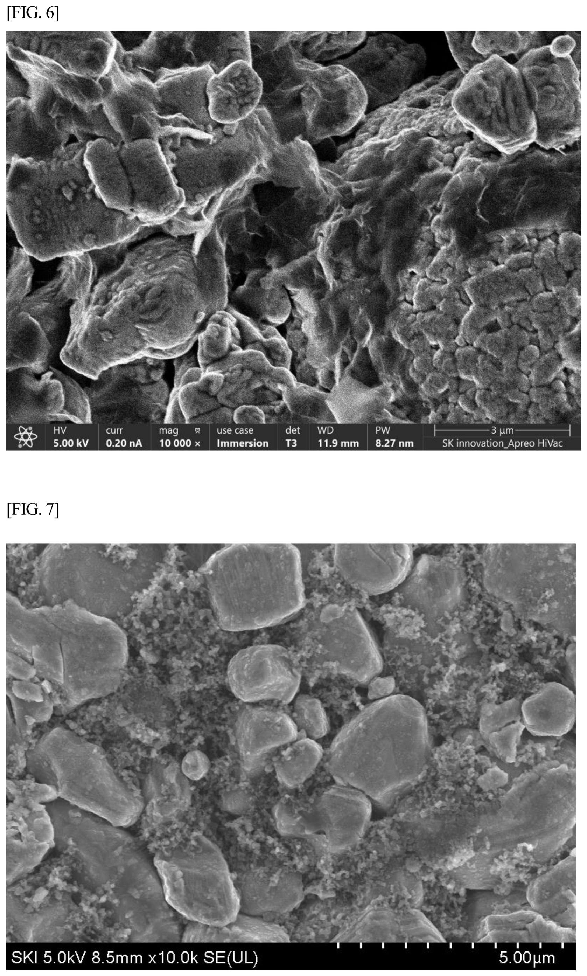

Referring to Table 4, in the examples that included cathodes including graphene conductive materials having the number of layers of 2 to 15, the electrode internal resistance was reduced. Consequently, the rate characteristics of the batteries of the examples were improved.
On the other hand, in Comparative Examples 1 and 2, which included cathodes including graphene conductive materials having the number of layers exceeding 15 and a relatively low BET specific surface area, the number of graphene particles per unit weight decreased, reducing the contact area between the active material particles and the conductive material. This adversely affected the formation of conductive paths between the active material and the conductive material, leading to deterioration of the electrode internal resistance properties.
Furthermore, the electrode internal resistance of the cathodes of Comparative Examples 3 to 7, which did not include graphene conductive materials, was significantly higher than that of the examples, and the rate characteristics of the batteries were also degraded.
Referring to FIG. 5, the surface of the cathode active material layer of Example 1 shows uniform mixing and contact between the conductive material and the cathode active material particles.
Referring to FIGS. 6 to 9, on the surface of the cathode active material layer of the comparative examples, the conductive material was locally distributed in some regions, the cathode active material particles and the conductive material were not well connected, and aggregates of the conductive material were present in the pores of the cathode active material layer, which may hinder the migration of lithium ions. Accordingly, the electrical conductivity of the cathode active material layer was reduced.
The contents described above are merely examples of applying the principles of the present disclosure, and other configurations may be further included without departing from the scope of the present disclosure.
The invention relates also to the following numbered aspects:

Aspect 1. An electrode for a secondary battery comprising:

an electrode current collector; and
an electrode active material layer disposed on one surface of the electrode current collector and comprising an electrode active material and a graphene conductive material,
wherein the number of layers of the graphene conductive material, as defined by Equation 1 below, is 2 to 15:

$$[\text{Equation 1}]$$

$$\text{Number of layers} = (Lc / D) + 1$$

(in Equation 1, Lc represents a grain size (Å) and D represents a d-spacing (Å), calculated from X-ray diffraction (XRD) analysis results of the graphene conductive material).

Aspect 2. The electrode for a secondary battery according to aspect 1, wherein the number of layers is 3 to 12.

Aspect 3. The electrode for a secondary battery according to aspect 1 or aspect 2, wherein in Equation 1, D is 2.5 Å to 3.5 Å.

Aspect 4. The electrode for a secondary battery according to any one of aspects 1 to 3, wherein in Equation 1, Lc is 7.5 Å to 50 Å.

Aspect 5. The electrode for a secondary battery according to any one of aspects 1 to 4, wherein the ratio ($I_D/I_G$) of the maximum peak intensity of the D band to the maximum peak intensity of the G band, calculated from the Raman spectroscopy results of the graphene conductive material, is greater than 0 and less than or equal to 1.

Aspect 6. The electrode for a secondary battery according to any one of aspects 1 to 5, wherein the graphene conductive material has a 1 $g/cm^3$ powder resistivity of 0.005 $\Omega \cdot cm$ or less.

Aspect 7. The electrode for a secondary battery according to any one of aspects 1 to 6, wherein the graphene conductive material has a BET specific surface area of 100 $m^2/g$ to 1000 $m^2/g$.

Aspect 8. The electrode for a secondary battery according to any one of aspects 1 to 7, wherein the content of the graphene conductive material is 0.01% by weight to 1% by weight based on the total weight of the electrode active material layer.

Aspect 9. The electrode for a secondary battery according to any one of aspects 1 to 8, wherein the content of the graphene conductive material is 0.1% by weight to 0.5% by weight based on the total weight of the electrode active material layer.

Aspect 10. The electrode for a secondary battery according to any one of aspects 1 to 9, wherein the electrode active material comprises a lithium metal oxide.

Aspect 11. The electrode for a secondary battery according to any one of aspects 1 to 10, wherein the electrode active material comprises a graphite-based active material or a silicon-based active material.

Aspect 12. A lithium secondary battery comprising a cathode and an anode disposed opposite to the cathode, wherein the cathode or the anode is the electrode for a secondary battery according to any one of aspects 1 to 11.

**Claims**

1. An electrode for a secondary battery comprising:

   an electrode current collector; and
   an electrode active material layer disposed on one surface of the electrode current collector and comprising an electrode active material and a graphene conductive material,
   wherein the number of layers of the graphene conductive material, as defined by Equation 1 below, is 2 to 15:

   $$[\text{Equation 1}]$$

   $$\text{Number of layers} = (Lc / D) + 1$$

   (in Equation 1, Lc represents a grain size (Å) and D represents a d-spacing (Å), calculated from X-ray diffraction (XRD) analysis results of the graphene conductive material).

2. The electrode for a secondary battery according to claim 1, wherein the number of layers is 3 to 12.

3. The electrode for a secondary battery according to claim 1 or claim 2, wherein in Equation 1, D is 2.5 Å to 3.5 Å.

4. The electrode for a secondary battery according to any one of claims 1 to 3, wherein in Equation 1, Lc is 7.5 Å to 50 Å.

5. The electrode for a secondary battery according to any one of claims 1 to 4, wherein the ratio ($I_D/I_G$) of the maximum peak intensity of the D band to the maximum peak intensity of the G band, calculated from the Raman spectroscopy results of the graphene conductive material, is greater than 0 and less than or equal to 1.

6. The electrode for a secondary battery according to any one of claims 1 to 5, wherein the graphene conductive material has a 1 g/cm$^3$ powder resistivity of 0.005 $\Omega$·cm or less.

7. The electrode for a secondary battery according to any one of claims 1 to 6, wherein the graphene conductive material has a BET specific surface area of 100 m$^2$/g to 1000 m$^2$/g.

8. The electrode for a secondary battery according to any one of claims 1 to 7, wherein the content of the graphene conductive material is 0.01% by weight to 1% by weight based on the total weight of the electrode active material layer.

9. The electrode for a secondary battery according to any one of claims 1 to 8, wherein the content of the graphene conductive material is 0.1% by weight to 0.5% by weight based on the total weight of the electrode active material layer.

10. The electrode for a secondary battery according to any one of claims 1 to 9, wherein the electrode active material comprises a lithium metal oxide.

11. The electrode for a secondary battery according to any one of claims 1 to 10, wherein the electrode active material comprises a graphite-based active material or a silicon-based active material.

12. A lithium secondary battery comprising a cathode and an anode disposed opposite to the cathode, wherein the cathode or the anode is the electrode for a secondary battery according to any one of claims 1 to 11.

[FIG. 1]

[FIG. 2]

[FIG. 3]

[FIG. 4]

[FIG. 5]

[FIG. 6]

[FIG. 7]

[FIG. 8]

[FIG. 9]

| | Europäisches Patentamt European Patent Office Office européen des brevets | **EUROPEAN SEARCH REPORT** | Application Number EP 25 21 2123 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/044210 A1 (YAMAZAKI SHUNPEI [JP] ET AL) 9 February 2023 (2023-02-09) * claims 1-19 * * paragraph [0150] * ----- | 1-12 | INV. H01M4/62 |
| X | WO 2018/217263 A2 (UNIV NORTHWESTERN [US]) 29 November 2018 (2018-11-29) * claims 1-4,12,19 * ----- | 1-12 | |
| X | US 2012/308884 A1 (OGUNI TEPPEI [JP] ET AL) 6 December 2012 (2012-12-06) * claims 1-20 * * paragraph [0002] * ----- | 1-12 | |
| X,P | WO 2025/143260 A1 (3DC INC [JP]) 3 July 2025 (2025-07-03) * claims 1-23 * * examples 1,2 * ----- | 1-7, 10-12 | |

TECHNICAL FIELDS SEARCHED (IPC)

H01M

The present search report has been drawn up for all claims

| Place of search | Date of completion of the search | Examiner |
|---|---|---|
| Munich | 19 March 2026 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 2123

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2026

| Patent document cited in search report | | Publication date | Patent family member(s) | | Publication date |
|---|---|---|---|---|---|
| US 2023044210 | A1 | 09-02-2023 | JP | 2025148564 A | 07-10-2025 |
| | | | JP | WO2021130610 A1 | 01-07-2021 |
| | | | US | 2023044210 A1 | 09-02-2023 |
| | | | WO | 2021130610 A1 | 01-07-2021 |
| WO 2018217263 | A2 | 29-11-2018 | CN | 110832681 A | 21-02-2020 |
| | | | EP | 3586388 A2 | 01-01-2020 |
| | | | JP | 7262392 B2 | 21-04-2023 |
| | | | JP | 2020508541 A | 19-03-2020 |
| | | | KR | 20190114994 A | 10-10-2019 |
| | | | US | 2018254517 A1 | 06-09-2018 |
| | | | US | 2021344036 A1 | 04-11-2021 |
| | | | US | 2024079637 A1 | 07-03-2024 |
| | | | WO | 2018217263 A2 | 29-11-2018 |
| US 2012308884 | A1 | 06-12-2012 | CN | 102810671 A | 05-12-2012 |
| | | | JP | 5879000 B2 | 08-03-2016 |
| | | | JP | 5984515 B2 | 06-09-2016 |
| | | | JP | 6280938 B2 | 14-02-2018 |
| | | | JP | 6634101 B2 | 22-01-2020 |
| | | | JP | 7358439 B2 | 10-10-2023 |
| | | | JP | 2013011017 A | 17-01-2013 |
| | | | JP | 2016021400 A | 04-02-2016 |
| | | | JP | 2016106364 A | 16-06-2016 |
| | | | JP | 2018063957 A | 19-04-2018 |
| | | | JP | 2019050221 A | 28-03-2019 |
| | | | JP | 2020047600 A | 26-03-2020 |
| | | | JP | 2022016584 A | 21-01-2022 |
| | | | KR | 20120135081 A | 12-12-2012 |
| | | | KR | 20190137054 A | 10-12-2019 |
| | | | KR | 20200138130 A | 09-12-2020 |
| | | | KR | 20210118007 A | 29-09-2021 |
| | | | KR | 20220166228 A | 16-12-2022 |
| | | | TW | 201311554 A | 16-03-2013 |
| | | | TW | 201630808 A | 01-09-2016 |
| | | | TW | 201726546 A | 01-08-2017 |
| | | | US | 2012308884 A1 | 06-12-2012 |
| WO 2025143260 | A1 | 03-07-2025 | CN | 121013822 A | 25-11-2025 |
| | | | CN | 121263381 A | 02-01-2026 |
| | | | JP | 7745311 B1 | 29-09-2025 |
| | | | JP | 7822106 B2 | 02-03-2026 |
| | | | JP | 2025175069 A | 28-11-2025 |
| | | | JP | WO2025143259 A1 | 03-07-2025 |
| | | | JP | WO2025143260 A1 | 03-07-2025 |
| | | | TW | 202542078 A | 01-11-2025 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 21 2123

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2026

| Patent document cited in search report | Publication date | Patent family member(s) | Publication date |
|---|---|---|---|
| | | TW 202545816 A | 01-12-2025 |
| | | WO 2025143259 A1 | 03-07-2025 |
| | | WO 2025143260 A1 | 03-07-2025 |

EPO FORM P0459

For more details about this annex : see Official Journal of the European Patent Office, No. 12/82

page 2 of 2